# EUROPÄISCHE PATENTSCHRIFT

(11) **EP 2 399 318 B1**
(45) Veröffentlichungstag und Bekanntmachung des Hinweises auf die Patenterteilung: **29.07.2015**
(21) Anmeldenummer: 10705802.6
(22) Anmeldetag: 17.02.2010
(51) Int. Cl.: C07F 5/02, C07F 5/04, C07F 9/6574, H01M 4/38, H01M 10/052, H01M 10/0567, H01M 10/0568, H01M 10/42, H01M 4/134

(54) **GALVANISCHE ZELLE MIT EINEM LITHIUMMETALL ODER EINER LITHIUMMETALLHALTIGEN LEGIERUNG ALS ANODENMATERIAL UND EINEM ELEKRTOLYTEN MIT LITHIUM BIS(OXALATO)BORAT SOWIE MINDESTENS EINEM WEITEREN LITHIUMKOMPLEXSALZ**
GALVANIC CELL HAVING A LITHIUM METAL OR AN ALLOY COMPRISING A LITHIUM METAL AS ANODE MATERIAL AND AN ELECTROLYTE HAVING LITHIUM BIS(OXALATO)BORATE AND AT LEAST ONE OTHER LITHIUM COMPLEX SALT
CELLULE GALVANIQUE COMPRENANT DU LITHIUM MÉTAL OU UN ALLIAGE CONTENANT DU LITHIUM MÉTAL COMME MATÉRIAU D'ANODE ET UN ÉLECTROLYTE CONTENANT DU LITHIUM-BIS(OXALATO)BORATE AINSI QU'AU MOINS UN AUTRE SEL COMPLEXE DE LITHIUM

(30) Priorität: 18.02.2009 DE 102009000977
(43) Veröffentlichungstag der Anmeldung: 28.12.2011
(73) Patentinhaber: Chemetall GmbH, 60487 Frankfurt am Main (DE)
(72) Erfinder: WIETELMANN, Ulrich, 61381 Friedrichsdorf (DE); BUHRMESTER, Thorsten, 64287 Darmstadt (DE); EMMEL, Ute, 65929 Frankfurt am Main (DE); METZGER, Rebecca, 65817 Eppstein (DE)
(74) Vertreter: Rottmayer, Hans
(86) Internationale Anmeldenummer: PCT/EP2010/000992
(87) Internationale Veröffentlichungsnummer: WO 2010/094467

(56) Entgegenhaltungen:
- EP-A2- 1 487 047
- DE-A1- 19 933 898
- DE-A1-102004 011 522
- DE-A1-102008 040 153

## Beschreibung

Die Erfindung betrifft eine galvanische Zelle mit einer Lithiummetall oder eine lithiummetallhaltigen Legierung als Anodenmaterial.

Mobile elektronische Geräte benötigen zur unabhängigen Stromversorgung immer leistungsfähigere wiederaufladbare Batterien. Neben Nickel/Cadmium- und Nickel/Metallhydrid-Akkumulatoren sind für diese Zwecke insbesondere Lithiumbatterien geeignet, die im Vergleich zu den erstgenannten Systemen eine deutlich höhere Energiedichte aufweisen. Zukünftig sollen großformatige Lithiumakkumulatoren auch z.B. für stationäre Anwendungen (power back-up) sowie im Automobilbereich für Traktionszwecke (Hybridantriebe oder reinelektrischen Antrieb) eingesetzt werden. Zur Zeit werden für diesen Zweck Lithiumionenbatterien entwickelt und verwendet, bei denen als Anode ein graphithaltiger Stoff eingesetzt wird. Graphitanoden können im geladenen Zustand im Allgemeinen nicht mehr als 1 Lithium pro 6 Kohlenstoffatome entsprechend einer Grenzstöchiometrie LiC₆ einlagern (interkalieren). Daraus ergibt sich eine Lithiumdichte von max. 8,8 Gew.-%. Deshalb bewirkt das Anodenmaterial eine unerwünschte Begrenzung der Energiedichte solcher Batteriesysteme.

Anstelle von Lithium-Interkalationsanoden wie Graphit kann prinzipiell auch Lithiummetall oder eine lithiummetallhaltige Legierung (z.B. Legierungen des Lithiums mit Aluminium, Silizium, Zinn, Titan oder Antimon) als Anodenmaterial verwendet werden. Dieses Prinzip würde im Vergleich zur gängigen Graphitinterkalationskathode eine deutlich höhere spezifische Lithiumbeladung und damit Energiedichte erlauben. Leider weisen solche lithiummetallhaltigen Systeme ungünstige Sicherheitseigenschaften auf. Unter ungünstigen Betriebsbedingungen (z.B. erhöhte Temperaturen) können Zersetzungsreaktionen auftreten, welche zu einer gefährlichen run-away - Situation führen. Die Batterie gerät dann auf einen Selbsterhitzungspfad, wodurch es zu einer explosionsartigen Gasbildung und einer Zerstörung des Batteriegehäuses kommen kann. Aufgrund der Brennbarkeit gängiger Elektrolytlösungen bestehend aus organischen Lösungsmitteln oder deren Gemischen wie Kohlensäureester z.B. Ethylencarbonat (EC), Propylencarbonat (PC), Ethylmethylcarbonat (EMC), Lactone z.B. γ-Butyrolacton (γ-BL) oder Ether z.B. Dimethoxyethan (DME) kann es zu Bränden kommen. Da gegenwärtige Lithiumbatterien ein labiles fluorhaltiges Leitsalz (LiPF₆ oder LiBF₄) enthalten, bilden sich bei solchen Ereignissen zudem gefährliche, ätzende und toxische Zersetzungsprodukte (Fluorwasserstoff und flüchtige fluorhaltige organische Produkte). Aus diesen Gründen werden lithiummetallhaltige wiederaufladbare Batterien bisher nur in Mikrobauweise z.B. Knopfzellen hergestellt.

Dokument DE 10 2004 011 522 A1 beschreibt Lithium-Boratkomplexsalze, deren Herstellung und Verwendung in galvanischen Zellen bzw. Leitsalze in Lithiumionenbatterien. Lithium-bis(oxalato)borat wird danach im Gemisch mit unsymmetrisch substituierten Lithium-boratsalzen hergestellt und als Leitsalzgemisch eingesetzt.

Das Dokument EP 1 487 047 A2 betrifft das Problem, dass sich Lithiumlegierungen in Lithiumbatterien während des Betriebes in kleine Stücke aufspalten und damit zu einer Vergrößerung ihrer Oberfläche sowie einer unzureichenden Zyklencharakteristik führen. Als Lösung wird der Zusatz eines Leichtmetallsalzes mit einer sehr allgemeinen Struktur angegeben, welche auch Lithium-bis(oxalato)borat widergibt.

Die Erfindung hat sich die Aufgabe gestellt, die vorstehend beschriebenen Nachteile des Standes der Technik zu überwinden und ein sicheres wiederaufladbares Batteriesystem mit einer die Lithiumionen-Technologie übersteigenden Energiedichte vorzuschlagen.

Erfindungsgemäß wird die Aufgabe durch eine galvanische Zelle mit einer Lithiummetall oder eine lithiummetallhaltigen Legierung als Anodenmaterial gelöst, die einen Elektrolyt enthaltend Lithium bis(oxalato)borat sowie mindestens ein weiteres Lithiumkomplexsalz der Formeln I und/oder II in einem aprotischen Lösemittel oder Lösemittelgemisch, wobei 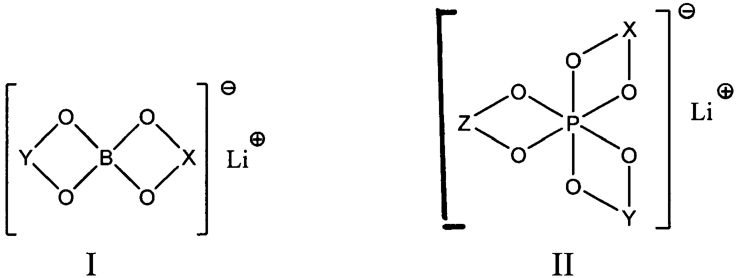 wobei der Anteil der Verbindung (I) und/oder (II) im Leitsalz 0,01 bis 20 mol-% beträgt und X, Y und Z in den Formeln (I, II) eine mit zwei Sauerstoffatomen zum Bor- oder Phosphoratom verbundene Brücke ist, die ausgewählt ist aus 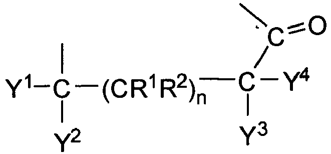 oder 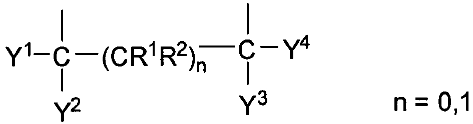 oder 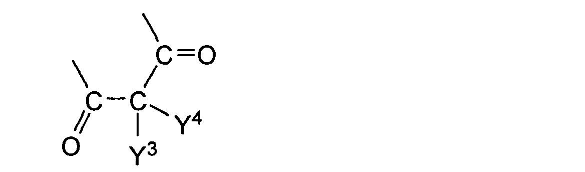 oder 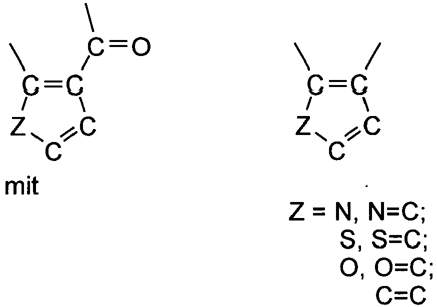 Y¹ und Y² zusammen = O bedeuten, n = 0 und Y³ und Y⁴ unabhängig voneinander H oder ein Alkylrest mit 1 bis 5 C-Atomen sind, oder Y¹, Y², Y³, Y⁴ jeweils unabhängig voneinander OR (mit R = Alkylrest mit 1 bis 5 C-Atomen), H oder ein Alkylrest R¹, R² mit 1 bis 5 C-Atomen sind, und wobei n = 0 oder 1 ist, wobei im Elektrolyten nur fluorfreie Materialien enthalten sind.

Es wurde überraschend gefunden, dass LiBOB im Gemisch mit einem der genannten Komplexadditive offensichtlich eine dünne, extrem thermostabile Schicht auf der Lithiummetall- oder einer Lithiummetalllegierungsoberfläche bildet, die eine Zersetzungsreaktion zwischen dem lithiummetallhaltigen Anodenmaterial und Elektrolytkomponenten wirkungsvoll verhindert. Außerdem kann die unerwünschte Gasbildung bei höheren Temperaturen, welche zum Zerplatzen einer Batteriezelle führen kann, wesentlich reduziert werden. Dieser Effekt wird beim Einsatz eines Elektrolyten, der als Leitsalz ausschließlich LiBOB oder der ein fluorhaltiges Leitsalz enthält, nicht beobachtet.

Erfindungsgemäß sind im Elektrolyt nur fluorfreie Materialien enthalten.

Weiterhin bevorzugt ist eine galvanische Zelle, in der der Elektrolyt als Flüssig- oder Gel-Elektrolyt vorliegt.

Vorzugsweise ist das Lösungsmittel im Elektrolyt der galvanischen Zelle Propylencarbonat oder ein Gemisch aus Ethylencarbonat und Ethylmethylcarbonat.

Erfindungsgemäß wird die galvanische Zelle für die Herstellung großformatiger Batterien für die Elektrotraktion oder für stationäre Anwendungen verwendet.

Zur Demonstration der oben geschilderten überraschenden Beobachtungen werden nachfolgend Experimente mit nicht erfindungsgemäßen Lithiummetall/Elektrolytmischungen beschrieben. Für die Experimente wurden wasserfreie Mischungen aus Lithiummetall (Batteriequalität, d.h der Na-Gehalt lag unter 200 ppm), Lithiumleitsalzen (LiBOB) und gegebenfalls einem weiteren Lithiumkomplexsalz z.B. Lithium-tris(oxalato)phosphat (LiTOP) oder Lithium malonato-oxalatoborat (LiMOB) in üblicherweise verwendeten Lösungsmitteln (PC oder EC-EMC) hergestellt und ca. 2,5 g solcher Mischungen in einer Argon-gefüllten Handschuhbox in ca. 3 ml fassende Stahlautoklaven abgefüllt. Diese Gefäße wurden in einer RADEX-Apparatur erhitzt und die auftretenden thermischen Effekte gemessen (DSC). Bei weiteren Versuchen wurden die Stahlautoklaven mit Druckmeßfühlern verbunden, so dass auch Gasbildung beobachtet werden konnte.

Es zeigen:

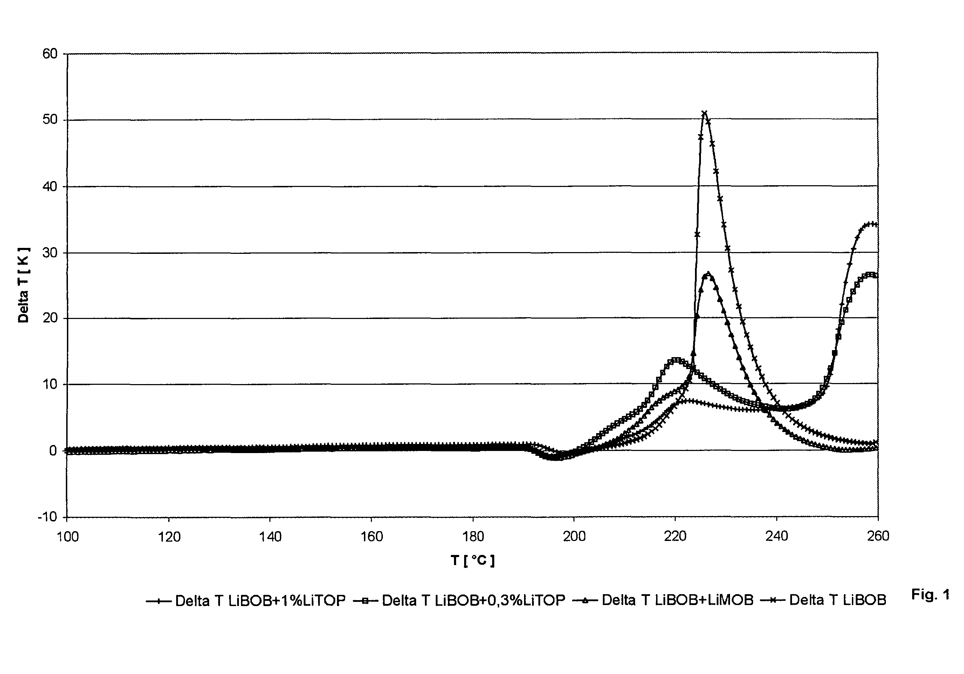

Abb. 1 - das Verhalten nicht erfindungsgemäßer, fluorfreier, LiBOB-basierter Elektrolytlösungen in Gegenwart von Li-Metall;

Man erkennt bei allen Experimenten bei einer Ofentemperatur von ca. 190-200 °C ein schwaches Endotherm, das auf das Aufschmelzen des enthaltenen Lithiummetalls zurückgeführt werden kann.

## Patentansprüche

1. Galvanische Zelle mit einem Lithiummetall oder einer lithiummetallhaltigen Legierung als Anodenmaterial, **dadurch gekennzeichnet, dass** ein Elektrolyt enthaltend Lithium bis(oxalato)borat sowie mindestens ein weiteres Lithiumkomplexsalz der Formeln I und/oder II in einem aprotischen Lösemittel oder Lösemittelgemisch, wobei 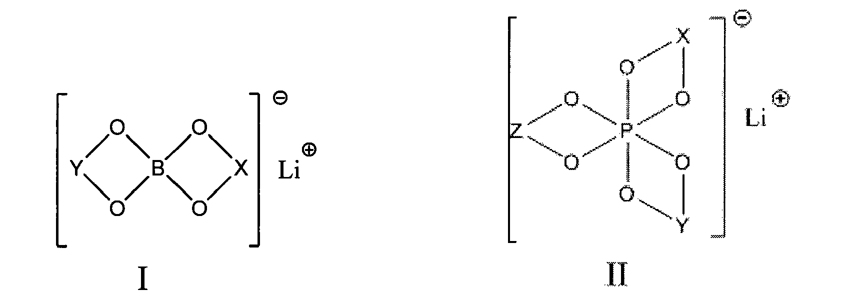 wobei der Anteil der Verbindung (I) und/oder (II) im Leitsalz 0,01 bis 20 mol-% beträgt und X, Y und Z in den Formeln (I, II) eine mit zwei Sauerstoffatomen zum Bor- oder Phosphoratom verbundene Brücke ist, die ausgewählt ist aus 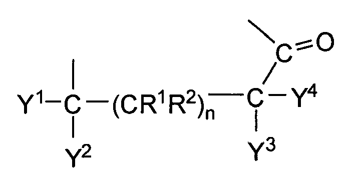 oder 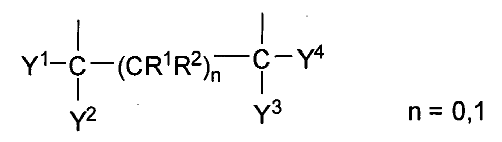 oder 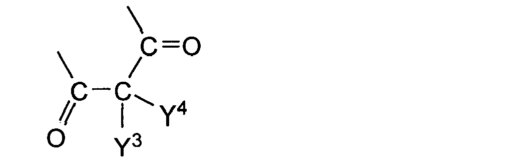 oder 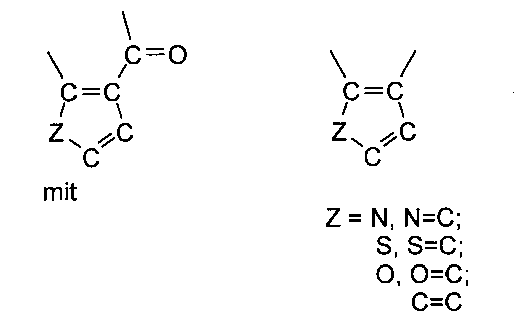 Y¹ und Y² zusammen = O bedeuten, n = 0 und Y³ und Y⁴ unabhängig voneinander H oder ein Alkylrest mit 1 bis 5 C-Atomen sind, oder Y¹, Y², Y³, Y⁴ jeweils unabhängig voneinander OR (mit R = Alkylrest mit 1 bis 5 C-Atomen), H oder ein Alkylrest R¹, R² mit 1 bis 5 C-Atomen sind, und wobei n = 0 oder 1 ist, wobei im Elektrolyten nur fluorfreie Materialien enthalten sind.

2. Galvanische Zelle nach Anspruch 1, **dadurch gekennzeichnet, dass** der Elektrolyt als Flüssig- oder Gel-Elektrolyt vorliegt.

3. Galvanische Zelle nach Anspruch 2, **dadurch gekennzeichnet, dass** das Lösungsmittel im Elektrolyt Propylencarbonat oder ein Gemisch aus Ethylencarbonat und Ethylmethylcarbonat ist.

4. Verwendung der galvanischen Zelle nach einem oder mehreren der Ansprüche 1 bis 3 für die Herstellung großformatiger Batterien für die Elektrotraktion oder für stationäre Anwendungen.

## Claims

1. A galvanic cell having a lithium metal or an alloy containing a lithium metal as anode material, **characterised in that** said galvanic cell has an electrolyte containing lithium bis(oxalato)borate and also at least one further lithium complex salt of formulae I and/or II in an aprotic solvent or solvent blend, 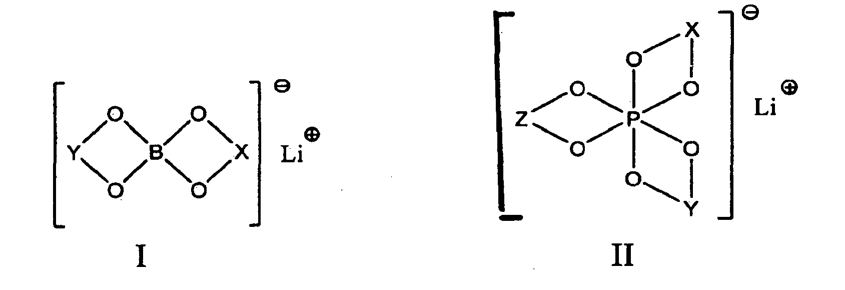 wherein the proportion of compound (I) and/or (II) in the conducting salt is 0.01 to 20 mol%, and X, Y and Z in the formulae (I, II) is a bridge which is connected to the boron or phosphorus atom by two oxygen atoms and is selected from 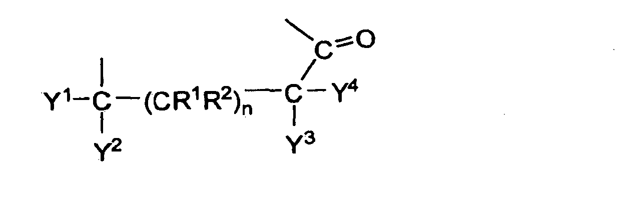 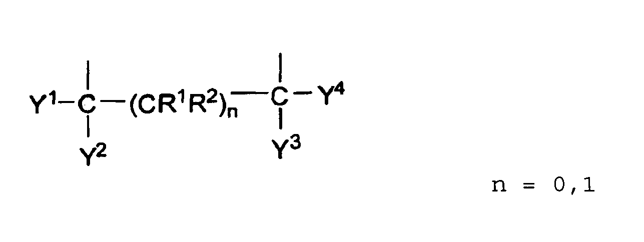 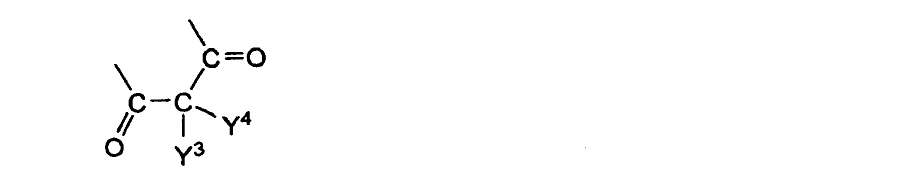 or 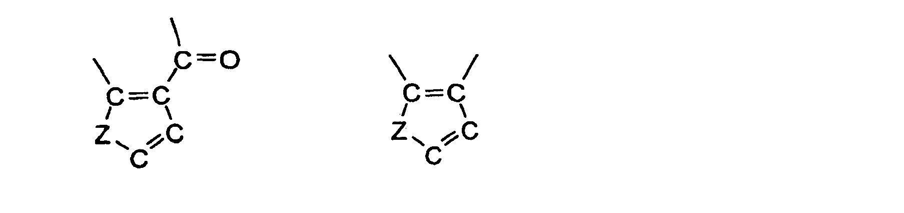 where 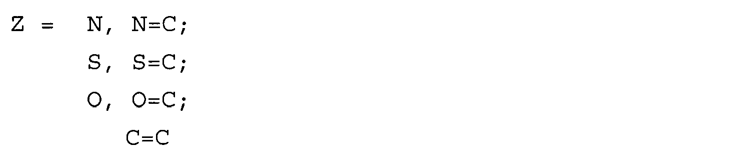 Y¹ and Y² together denote O, n = 0 and Y³ and Y⁴ are independently of each other H or an alkyl radical having 1 to 5 C atoms, or
Y¹, Y², Y³, Y⁴ are each independently of one another OR (where R = alkyl radical having 1 to 5 C atoms), H or an alkyl radical R¹, R² having 1 to 5 C atoms, and where n = O or 1, wherein only fluorine-free materials are contained in the electrolyte.

2. A galvanic cell according to claim 1, **characterised in that** the electrolyte is present as a liquid or gel electrolyte.

3. A galvanic cell according to claim 2, **characterised in that** the solvent in the electrolyte is propylene carbonate or a mixture of ethylene carbonate and ethyl methyl carbonate.

4. Use of the galvanic cell according to one or more of claims 1 to 3 to produce large-format batteries for electric traction or for static applications.

## Revendications

1. Pile galvanique comportant, en tant que matériau d'anode, du lithium métallique ou un alliage contenant du lithium métallique, et **caractérisée en ce que** l'électrolyte contient du bis(oxalato)borate de lithium ainsi que d'au moins un autre sel complexe de lithium de formule(s) I et/ou II dans un solvant ou mélange de solvants aprotique, 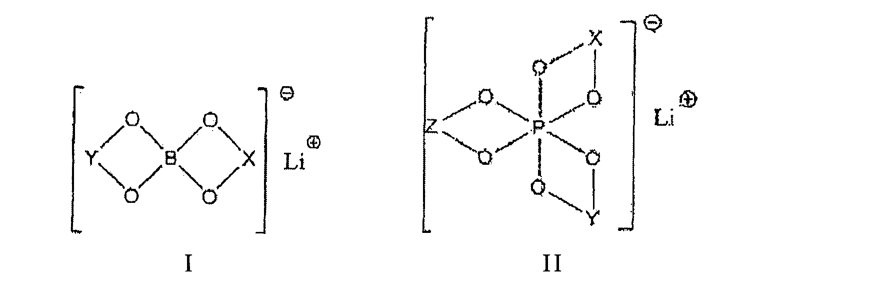 étant entendu que
- la fraction du ou des composé(s) (I) et /ou (II) dans le sel conducteur vaut de 0,01 à 20 % en moles,
- X, Y et Z, dans les formules I et II, représentent un pont, rattaché par deux atomes d'oxygène à l'atome de bore ou de phosphore, qui est choisi parmi ceux de formules suivantes : 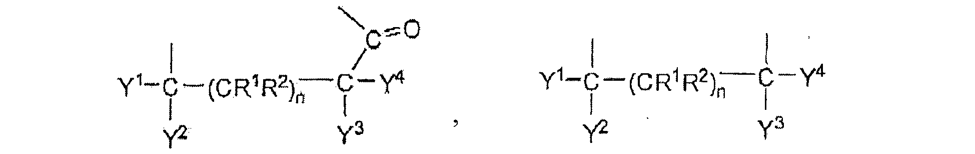 où l'indice n vaut 0 ou 1, 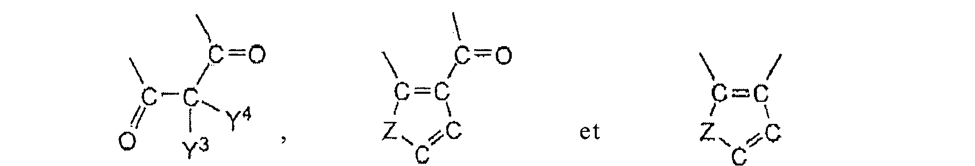 dans lesquelles formules
Z représente un chaînon symbolisé par N, N=C, S, S=C, O, O=C ou C=C,
et Y¹ et Y² représentent conjointement un substituant oxo =O, l'indice n vaut 0 et Y³ et Y⁴ représentent, indépendamment l'un de l'autre, un atome d'hydrogène ou un groupe alkyle comportant 1 à 5 atomes de carbone,
ou Y¹, Y², Y³ et Y⁴ représentent, indépendamment les uns des autres, un groupe symbolisé par OR où R représente un groupe alkyle comportant 1 à 5 atomes de carbone, un atome d'hydrogène ou un groupe alkyle R¹, R² comportant 1 à 5 atomes de carbone, et l'indice n vaut 0 ou 1,
- et l'électrolyte ne contient que des substances sans fluor.

2. Pile galvanique conforme à la revendication 1, **caractérisée en ce que** l'électrolyte se présente sous forme de liquide ou de gel.

3. Pile galvanique conforme à la revendication 2, **caractérisée en ce que** le solvant de l'électrolyte est du carbonate de propylène ou un mélange de carbonate d'éthylène et de carbonate d'éthyle et de méthyle.

4. Utilisation d'un pile galvanique conforme à l'une des revendications 1 à 3 pour la fabrication de batteries de grand format pour traction électrique ou pour des applications stationnaires.
